(19) Europäisches Patentamt
European Patent Office
Office européen des brevets

(11) **EP 3 491 517 B1**

(12) **EUROPÄISCHE PATENTSCHRIFT**

(45) Veröffentlichungstag und Bekanntmachung des Hinweises auf die Patenterteilung:
**11.01.2023 Patentblatt 2023/02**

(21) Anmeldenummer: **17749420.0**

(22) Anmeldetag: **31.07.2017**

(51) Internationale Patentklassifikation (IPC):
**G06F 9/44** *(2018.01)* **G05B 19/05** *(2006.01)*
**G05B 19/042** *(2006.01)* **G06F 8/10** *(2018.01)*
**G06F 30/20** *(2020.01)* G06F 117/08 *(2020.01)*

(52) Gemeinsame Patentklassifikation (CPC):
**G06F 8/10; G05B 19/0426; G06F 30/20;**
G06F 2117/08

(86) Internationale Anmeldenummer:
**PCT/EP2017/069322**

(87) Internationale Veröffentlichungsnummer:
**WO 2018/020051 (01.02.2018 Gazette 2018/05)**

(54) **SIGNALFLUSSBASIERTES COMPUTERPROGRAMM MIT DIRECT-FEEDTHROUGH-SCHLEIFEN**

SIGNAL FLOW-BASED COMPUTER PROGRAM WITH DIRECT FEEDTHROUGH LOOPS

PROGRAMME INFORMATIQUE BASÉ SUR UN FLUX DE SIGNAUX COMPORTANT DES BOUCLES DE TRAVERSÉE DIRECTE (DF)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.07.2016 AT 506932016**

(43) Veröffentlichungstag der Anmeldung:
**05.06.2019 Patentblatt 2019/23**

(73) Patentinhaber:
• **AVL List GmbH**
**8020 Graz (AT)**
• **Virtual Vehicle Research GmbH**
**8010 Graz (AT)**

(72) Erfinder:
• **PRILLER, Peter**
**8111 Gratwein-Straßengel (AT)**
• **PÖLZLBAUER, Florian**
**8010 Graz (AT)**

(74) Vertreter: **Patentanwälte Pinter & Weiss OG**
**Prinz-Eugen-Straße 70**
**1040 Wien (AT)**

(56) Entgegenhaltungen:
• **Anonymous: "Algebraic Loops - MATLAB & Simulink - MathWorks Deutschland", , 1. Juli 2016 (2016-07-01), Seiten 1-15, XP055424845, Gefunden im Internet: URL:https://web.archive.org/web/2016070111 2004/http://de.mathworks.com/help/simulink /ug/algebraic-loops.html [gefunden am 2017-11-14]**
• **Mao Zifang: "MODELING AND SIMULATION OF ELECTRIC VEHICLE ALGEBRAIC LOOP PROBLEMS REGARDING BATTERY AND FUEL CELLS", , 1. August 2014 (2014-08-01), XP055424940, Gefunden im Internet: URL:https://etda.libraries.psu.edu/files/f inal_submissions/9620 [gefunden am 2017-11-14]**

EP 3 491 517 B1

**Beschreibung**

Die gegenständliche Erfindung betrifft ein Verfahren zum Steuern des Ablaufs eines signalflussbasierten Computerprogramms auf einer Recheneinheit einer technischen Anlage zum Steuern, Regeln, Automatisieren oder Simulieren einer technischen Funktion der technischen Anlage zur Entwicklung eines Fahrzeuges bzw. einer Fahrzeugkomponente, wobei das signalflussbasierte Computerprogramm aus miteinander verbundenen Software-Komponenten besteht und zumindest eine DF-Schleife aufweist. Ferner betrifft die Erfindung auch ein Computerprogrammprodukt, das diese Verfahren realisiert, und ein computerlesbares Medium mit einem solchen Computerprogrammprodukt.

In der Recheneinheit einer technischen Anlage werden in der Regel durch ein signalflussbasiertes Computerprogramm eine oder mehrere Eingangsgrößen der technischen Anlage auf eine oder mehrere Ausgangsgrößen der technischen Anlage abgebildet. Die technische Anlage kann z.B. einen Prüfstand darstellen, der eine technische Funktion, oder einen Teil davon, steuert, regelt, automatisiert oder auch simuliert. Insbesondere eine Simulation der technischen Funktion bringt einige Vorteile: Eine Simulation ist beliebig oft wiederholbar und direkte Messungen am technischen System, also z.B. auf einem Prüfstand, sind nicht notwendig. Bei einem signalflussbasierten Computerprogramm ist es bekannterweise notwendig vor der Ausführung des Computerprogramms vorab die Abarbeitungsreihenfolge von Software-Komponenten des Computerprogramms zu bestimmen. In weiterer Folge werden die Software-Komponenten des Computerprogramms bei der Ausführung des Computerprogramms nach der ermittelten Abarbeitungsreihenfolge abgearbeitet. Dies erfolgt üblicherweise zyklisch und in fest vorgegebenen Intervallen, unter Umständen sogar in Echtzeit. Die einzelnen Software-Komponenten des Computerprogramms bilden in der Regel zumindest ein Eingangssignal an einem Komponenteneingang auf zumindest ein Ausgangssignal an einem Komponentenausgang ab. Es sind natürlich auch Software-Komponenten ohne Komponenteneingang oder ohne Komponentenausgang möglich, derartige Software-Komponenten sind bei der folgenden Problemstellung jedoch nicht relevant. Die Software-Komponenten sind also über deren Komponenteneingänge und/oder Komponentenausgänge miteinander verbunden, sodass sich insgesamt das signalflussbasiertes Computerprogramm, oder ein Teil davon, als Summe der beteiligten Software-Komponenten und deren Verbindung ergibt.

Das signalflussbasierte Computerprogramm wird also grundsätzlich in drei Phasen behandelt: Erstellen der einzelnen Software-Komponenten des Computerprogramms und Verschalten zum Computerprogramm, Bestimmen einer Abarbeitungsreihenfolge der SoftwareKomponenten, und darauffolgend das Ausführen des Computerprogramms entsprechend der ermittelten Abarbeitungsreihenfolge der Software-Komponenten. Die Phasen der Erstellung der Software-Komponenten und der Ermittlung der Abarbeitungsreihenfolge ebendieser erfolgen normalerweise "offline", also vor der tatsächlichen Ausführung des Computerprogramms.

Es kann bei der Bestimmung der Abarbeitungsreihenfolge der Software-Komponenten jedoch ein Problem entstehen, wenn Software-Komponenten eine Schleife, also eine Rückkopplung, bilden. Bei einer Schleife wird typischerweise ein Komponentenausgang einer betrachteten Software-Komponente direkt oder über andere Software-Komponenten auf einen Komponenteneingang derselben Software-Komponente rückgekoppelt. Eine Schleife stellt also einen zyklischen Signalpfad dar. Wenn also in einer Schleife SoftwareKomponenten vorhanden sind, die mehrere Komponenteneingänge und Komponentenausgänge aufweisen, so wird die Schleife natürlich nur über je einen Komponenteneingang und je einen zugehörigen Komponentenausgang der jeweiligen Software-Komponenten gebildet. Natürlich können auch mehrere Schleifen vorhanden sein, womit mehrere Komponenteneingänge einer Software-Komponente gemeinsam mit einem Komponentenausgang dieser Software-Komponente mehrere Schleifen bilden können. In diesem Fall bildet die SoftwareKomponente mehrere Eingangssignale auf ein Ausgangssignal ab. Es können auch mehrere Schleifen über eine Komponenteneingang und mehrere Komponentenausgänge dieser einen Software-Komponente gebildet werden. In diesem Fall bildet die Software-Komponente ein Eingangssignal auf mehrere Ausgangssignale ab. Auch eine Abbildung mehrerer Eingangssignale auf mehrere Ausgangssignale durch eine Software-Komponente und die Bildung von mehreren Schleifen ist denkbar. Für jede einzelne Schleife sind jedoch nur der Komponenteneingang und der Komponentenausgang der Software-Komponente, die die betrachtete Schleife bilden, relevant. Natürlich kann die Abbildung des Komponenteneingangs auf den Komponentenausgang auch durch andere Parameter, z.B. einen weiteren Komponenteneingang derselben Komponente, beeinflusst werden.

Eine Schleife kann Software-Komponenten aufweisen, die eine sogenannte "non-direct-feedthrough" (NDF) Eigenschaft aufweisen. Das bedeutet, dass sich Änderungen des Eingangssignals am betrachteten Komponenteneingang der NDF-Komponente nicht sofort und im gleichen Zyklus der Abarbeitung des Computerprogramms auf das Ausgangssignal am zugehörigen Komponentenausgang dieser Software-Komponente auswirken. Eine NDF-Schleife beinhaltet also zumindest eine Software-Komponente, die als Teil der Schleife ein an zumindest einem Komponenteneingang anliegendes NDF-Eingangssignal auf zumindest ein an zumindest einem Komponentenausgang anliegendes Ausgangssignal abbildet. Es ist also die Softwarekomponente samt dem zumindest einen NDF-Eingangssignal und das zugehörige Ausgangssignal Teil der NDF-Schleife.

Es sind einige Methoden zur Behandlung von signalflussbasierten Computerprogrammen mit NDF-Schleifen bekannt. Die bekannte Software Simulink von The MathWorks zur Modellierung von Systemen, beispielsweise, handhabt NDF-Schleifen derart, dass Eingangssignale, welche an einem NDF-Eingang anliegen, bei der Ermittlung der Abarbeitungsreihenfolge der Software-Komponenten schlicht ignoriert werden. Die US 8,849,641 B1 ermöglicht andererseits ein automatisches Bestimmen der Abarbeitungsreihenfolge der Software-Komponenten von NDF-Schleifen.

Im Gegensatz dazu bedeutet eine DF ("direct-feedthrough")-Eigenschaft eines Komponenteneingangs einer Software-Komponente, dass sich Änderungen des Eingangssignals am betrachteten Komponenteneingang im selben Zyklus auf ein Ausgangssignal am zugehörigen Komponentenausgang dieser Software-Komponente auswirken, womit sich eine zyklische Datenabhängigkeit ergeben kann. Eine derartige Software-Komponente, die ein DF-Eingangssignal an einem Komponenteneingang unverzögert auf ein Ausgangssignal an einem Komponentenausgang abbildet, wird fortan als DF-Komponente bezeichnet. Eine DF-Schleife liegt dann vor, wenn sämtliche Software-Komponenten, welche die DF-Schleife aufspannen, DF-Komponenten sind. Teil der DF-Schleife sind nur die DF-Eingangssignale an den Komponenteneingängen und die Ausgangssignale an den Komponentenausgängen der DF-Komponenten die die DF-Schleife aufspannen. Diese Komponenteneingänge mit DF-Eingangssignalen wirken sich direkt und im selben Zyklus auf die Ausgangssignale am zugehörigen Komponentenausgang der betrachteten DF-Komponente aus. Die DF-Komponenten, die zwar DF-Eingangssignale und Ausgangssignale als Teil der Schleife aufweisen, können natürlich auch NDF-Eingangssignale aufweisen oder DF-Eingangssignale, die nicht Teil der betrachteten Schleife sind, sondern Teil einer weiteren DF-Schleife, einer NDF-Schleife oder gar keiner Schleife. Wichtig für die Eigenschaft einer DF-Schleife ist, dass im Signalpfad der DF-Schleife keine NDF-Komponenten als Abbildung von NDF-Eingangssignalen auf Ausgangssignale vorhanden sind.

Ist im Computerprogramm zumindest eine DF-Schleife, bestehend aus DF-Komponenten, vorhanden, so sind spezielle Methoden zum Auffinden der DF-Komponenten der DF-Schleife anzuwenden. Zu diesem Zweck seien insbesondere die Methoden der "depth-first search" (DFS) oder "breadth-first search" (BFS) zu nennen. Diese Methoden stellen bekannte Algorithmen aus der Graphen-Theorie dar. Im Falle der DFS-Methode werden ausgehend von einem Start-Knoten alle Vorgängerknoten besucht. Vorgängerknoten sind Knoten von welchem der betreffende Knoten abhängig ist (z.B. durch den notwendigen Datenfluss), die sich also in einer ersten Vorebene befinden. Ausgehend von den ersten Vorgänger-Knoten in der ersten Vorebene weitersuchend, geht man zu dessen Vorgängerknoten (zweite Vorebene) über. Dies wird so lange wiederholt bis es keinen Vorgänger-Knoten mehr gibt, oder man zu einem Knoten gelangt, welcher im Zuge der Suche schon einmal besucht wurde. In diesem Fall gilt eine zyklische Abhängigkeit als gegeben. Der durchlaufene Suchpfad enthält somit jene Knoten welche die Schleife darstellen. Bei der DFS-Methode wird immer jeweils ein Vorgängerknoten der Vorebene besucht, man geht somit zuerst "in die Tiefe", bis kein Vorgängerkoten existiert. Bei der BFS-Methode werden zuerst alle Vorgänger-Knoten der aktuellen Vorebene besucht (man geht also "in die Breite"), bevor man anschließend einen weiteren Schritt in die Tiefe geht.

Es gibt auch Algorithmen welche das Auffinden von Schleifen etwas effizienter als soeben genannte Methoden lösen, wobei auf D.B.Johnson (1975), "Finding all the elementary circuits of a directed graph" in Siam J. Comput, Vol.4, No1 und H.Lui and J.Wang (2006), "A new way to enumerate cycles in graph", State Key Lab of Intelligent Technology and System Department of Computer Science and Technology, Tsinghua University Beijing 100084, China verwiesen sei.

Methoden zur Identifikation von DF-Schleifen sind somit bekannt, die Auflösung der DF-Schleifen benötigt allerdings meist einen Eingriff durch den Benutzer. In der US 2005/0060129 A1 wird die Abarbeitungsreihenfolge der Software-Komponenten geändert, um damit die DF-Schleife zu lösen. Dabei handelt es sich um Schleifen, die durch hierarchische Modelle innerhalb der Software-Komponenten zustande kommen und nach Transformation in ein flaches Modell nicht mehr existieren - das heißt, dass es sich nicht um reale DF-Schleifen handelt und die in der US 2005/0060129 A1 beschriebene Lösung auf DF-Schleifen im herkömmlichen Sinn nicht anwendbar ist.

In M.Benedikt und F.R.Holzinger (2016), "Automated Configuration for Non-Iterative Co-Simulation" wird die automatisierte Konfiguration einer nicht-iterativen Co-Simulation beschrieben. Hierbei wird jede Software-Komponente innerhalb eines eigenen Solver gerechnet. Dadurch hat jede Software-Komponente ihre eigene lokale Simulationszeit. Die Abarbeitungsreihenfolge der Software-Komponenten wird dynamisch zur Laufzeit der Co-Simulation ermittelt und adaptiert. Es wird jeweils immer jene Software-Komponente gerechnet, dessen lokale Simulationszeit die älteste ist. Ist die lokale Simulationszeit ident (wie z.B. zum Simulationszeitpunkt t=0) wird jene Software-Komponente gerechnet, welche die geringste Anzahl von Komponenteneingängen aufweist. Dieses Verfahren ist jedoch nicht anwendbar, wenn alle Software-Komponenten in derselben Recheneinheit laufen, und dieselbe Simulationszeit haben.

Anonymus: "Algebraic Loops - MATLAB & Simulink - Mathworks Deutschland" beschreibt Möglichkeiten zur Identifizierung einer DF-Schleife, wobei zudem ein Auflösen einer DF-Schleife durch Einfügen eines Verzögerungsblocks offenbart wird.

Mao Zifang: "Modeling and Simulation of Electric Vehicle Algebraic Loop Problems regarding Battery and Fuel Cells" offenbart Simulationen von Fahrzeugen, bzw. Fahrzeugteilen, wobei DF-Schleifen vorhanden sind. Es wird vorgeschlagen ein Gleichungssystem derart umzustrukturieren, dass keine DF-Schleifen mehr vorhanden sind. Durch diesen Ansatz wird die Struktur des signalfluss-basierten Modells fundamental verändert und das gesamte Model neu erstellt.

Wenn DF-Schleifen eines signalflussbasierten Computerprogramms nicht behandelt werden, so ist die Abarbeitungsreihenfolge der Software-Komponenten aufgrund der zyklischen Abhängigkeit der DF-Komponenten in der DF-Schleife nicht eindeutig und das Computerprogramm kann nicht ausgeführt werden. Für die Abarbeitung des signalflussbasierten Computerprogramms mit einer DF-Schleife muss daher die DF-Schleife aufgelöst werden, um die Abarbeitungsreihenfolge der Software-Komponenten, einschließlich der DF-Komponenten, eindeutig ermitteln zu können.

Es ist daher die Aufgabe der vorliegenden Erfindung ein Verfahren zur Abarbeitung eines signalfluss-basierten Computerprogramms, das zumindest eine Direct-Feedthrough-Schleife aufweist, zu realisieren.

Diese Aufgabe wird durch ein Verfahren zum Steuern des Ablaufs eines signalflussbasierten Computerprogramms auf einer Recheneinheit einer technischen Anlage zum Steuern, Regeln Automatisieren oder Simulieren einer technischen Funktion der technischen Anlage zur Entwicklung eines Fahrzeuges bzw. einer Fahrzeugkomponente, wobei das Computerprogramm aus miteinander verbundenen Software-Komponenten besteht und zumindest eine DF-Schleife aufweist, bestehend aus folgenden Schritten, gelöst:

a) Identifizieren der zumindest einen DF-Schleife und der DF-Komponenten, die die zumindest eine DF-Schleife bilden, wobei die DF-Komponenten jeweils zumindest ein an zumindest einem Komponenteneingang anliegendes DF-Eingangssignal auf zumindest ein an zumindest einem Komponentenausgang anliegendes Ausgangssignal unverzögert abbilden, womit das zumindest eine DF-Eingangssignal und das zumindest eine Ausgangssignal Teil der zumindest einen DF-Schleife sind,

b) Bestimmen der maximal möglichen Änderung pro Zeiteinheit der Werte der DF-Eingangssignale aus zumindest einer Eigenschaft des jeweiligen DF-Eingangssignals, wobei die maximal mögliche Änderung pro Zeiteinheit als Signaldynamik bezeichnet wird, wobei eine jeweilige Signaldynamik des zumindest einen DF-Eingangssignals unter Bezug auf hinterlegte und/oder geschätzte Signaldynamiken anhand einer physikalischen Einheit des zumindest einen DF-Eingangssignals und/oder anhand eines Datentyps des zumindest einen DF-Eingangssignals bestimmt und mit einem Penalty-Wert bewertet wird und die Penalty-Werte verglichen werden,

c) Hinzuschalten eines Verzögerungsglieds vor jenen Komponenteneingang, an welchem ein DF-Eingangssignal anliegt, dessen Wert die geringste maximal mögliche Änderung pro Zeiteinheit aufweist, durch Ermitteln des DF-Eingangssignals mit dem geringsten Penalty-Wert und Versehen des zugehörigen Komponenteneingangs mit einem Verzögerungsglied

d) Ausführen des Computerprogramms nach der in Schritt a) bis c) ermittelten Verbindung der Software-Komponenten.

Jede DF-Komponente weist zumindest einen Komponenteneingang und zumindest einen Komponentenausgang auf. An jeder DF-Komponente liegt an zumindest einem Komponenteneingang zumindest ein DF-Eingangssignal an und an zumindest einem Komponentenausgang dieser DF-Komponente zumindest ein Ausgangssignal. Durch Verbindung dieser Komponenteneingänge und Komponentenausgänge wird das Ausgangssignal einer DF-Komponente an eine weitere DF-Komponente geführt, wo es als DF-Eingangssignal anliegt und wiederum auf ein Ausgangssignal abgebildet wird. Dies erfolgt so lange, bis eine DF-Schleife gebildet ist. Mehrere DF-Komponenten, bzw. jeweils ein Komponenteneingang und ein Komponentenausgang der DF-Komponenten spannen also eine DF-Schleife auf. Sind mehrere DF-Schleifen vorhanden, so können DF-Komponenten, bzw. deren Komponenteneingang und/oder Komponentenausgang auch Teil mehrerer Schleifen sein.

Es werden die im signalflussbasierten Computerprogramm enthaltenen Software-Komponenten, insbesondere DF-Komponenten also in den Schritten a) bis c) bereits vor Beginn der Abarbeitung des signalflussbasierten Computerprogramms erstellt, bzw. modifiziert und die Abarbeitungsreihenfolge der Software-Komponenten samt DF-Komponenten ermittelt.

Die durch das Verzögerungsglied erzeugte Verzögerung stellt somit in der im Schritt d) folgenden Abarbeitung des signalflussbasierten Computerprogramms für den jeweilig aktuellen Taktschritt ein Auftrennen der zugehörigen DF-Schleife vor dem Komponenteneingang des betreffenden DF-Eingangssignals dar. Damit ist die betreffende DF-Schleife für den aktuellen Taktschritt an dieser Stelle aufgelöst und wurde quasi zu einer NDF-Schleife umgeändert. Durch das Einfügen von Verzögerungsgliedern an der ermittelten Stelle wird also eine DF-Schleife in eine NDF-Schleife umgewandelt. Das Ausgangssignal, das von der davor liegenden DF-Komponente erzeugt wird, wird der danach folgenden DF-Komponente erst verzögert als DF-Eingangssignal zur Verfügung gestellt. Die dabei entstandene NDF-Schleife kann dann mit bewährten Verfahren gehandhabt werden. Durch die erzeugte Verzögerung wird während des Ablaufs des Computerprogramms im aktuellen Taktschritt der Wert des DF-Ausgangssignals der davor liegenden DF-Komponente eines vorherigen Taktschritt eingelesen - beispielsweise im Falle der Verzögerung um einen Taktschritt der Wert des vorherigen Taktschritts. Essentiell für die Bestimmung welcher Komponenteneingang mit einem Verzögerungsglied versehen wird, ist dabei die Ermittlung der innerhalb einer Zeiteinheit, z.B. eines Taktschritts, maximal möglichen Änderung des Werts des zumindest einen (unverzögerten) DF-Eingangssignals dieses Komponenteneingangs aus zumindest einer Eigenschaft des DF-Eingangssignals. Die Stärke, mit der sich der Wert eines DF-Eingangssignals an einer DF-Komponente ändern könnte, wird gemeinhin als maximale Signaldynamik des DF-Eingangssignals bezeichnet, weswegen in weiterer Folge die Bezeichnung Signaldynamik für "maximal mögliche Änderung des Werts" verwendet wird. Ist im signalflussbasierten Computerprogramm nur eine DF-Schleife mit einer DF-Komponente, deren DF-Ausgang auf den DF-Eingang der selben DF-Komponente rückgekoppelt ist, vorhanden, so wird trivialerweise dieser eine Komponenteneingang mit einem Verzögerungsglied versehen, woraufhin das signalflussbasierten Computerprogramm keine DF-Schleifen mehr aufweist. Sind jedoch mehrere DF-Komponenten mit DF-Eingangssignalen in einer DF-Schleife vorhanden, so wird die Signaldynamik der vorhandenen DF-Eingangssignale ermittelt. Jener Komponenteneingang, an dem ein DF-Eingangssignal mit der geringsten Signaldynamik anliegt ist mit einem Verzögerungsglied zu versehen und damit die eine DF-Schleife zu einer NDF-Schleife gewandelt. Treten in der einen Schleife mehrere DF-Eingangssignale mit derselben Signaldynamik auf, so wird ein Komponenteneingang, der eines dieser DF-Eingangssignale aufweist, mit dem Verzögerungsglied versehen.

Die Signaldynamik des zumindest einen DF-Eingangssignals kann jeweils mit einem Penalty-Wert bewertet werden, woraufhin die Penalty-Werte verglichen werden.

Im Prinzip sollte zum Lösen einer DF-Schleife jenes DF-Eingangssignal verzögert werden, welches durch die Verzögerung den geringsten Fehler am Ausgang des signalflussbasierten Computerprogramms hervorruft. Um diese jeweiligen durch das Verzögern der einzelnen DF-Eingangssignale am Ausgang des signalflussbasierten Computerprogramms verursachten Fehler zu bestimmen, können theoretisch die Komponenteneingänge, an denen die DF-Eingangssignale der DF-Komponenten, die die DF-Schleifen bilden, während der Ausführung des signalflussbasierten Computerprogramms testweise einzeln unterbrochen werden. Daraufhin könnten die DF-Eingangssignale bestimmt werden, welche den geringsten Fehler am Ausgang verursachen. Als Fehler würde also beispielsweise die Abweichung des Signals am Ausgang ohne Verzögerung des der DF-Eingangssignale vom Signal am Ausgang mit Unterbrechung des betrachteten DF-Eingangssignals bezeichnet. So würde also bestimmt werden, wie groß der Fehler am Ausgang werden könnte, wenn das DF-Eingangssignalsignal am Komponenteneingang der betrachteten DF-Komponente um zumindest einen Taktschritt verzögert wird, also wie erwähnt die DF-Schleife am betrachteten Komponenteneingang im aktuellen Taktschritt als aufgeschnitten gilt. Nachteilig ist jedoch, dass mit dieser Methode die Signaldynamik der DF-Eingangssignale an den Komponenteneingängen erst während der Ausführung des Computerprogramms ermittelt werden könnte. Da diese Information zur Bestimmung der Abarbeitungsreihenfolge der SoftwareKomponenten, insbesondere der DF-Komponenten im signalflussbasierten Computerprogramm bereits vor der eigentlichen Durchführung des signalflussbasierten Computerprogramms benötigt wird, muss vor dem Ausführen des Computerprogramms eine Schätzung (bzw. Näherung) der Signaldynamik der DF-Eingangssignale der DF-Komponenten erfolgen. Daraufhin wird der Komponenteneingang, an dem das DF-Eingangssignal mit der geringsten geschätzten Signaldynamik anliegt, ausgewählt, und vor den Komponenteneingang ein Verzögerungsglied 1/z eingesetzt. Sofern Penalty-Werte verwendet werden, ist der Penalty-Wert dabei umso höher, je größer die geschätzte Signaldynamik ist. Eine hohe geschätzte Signaldynamik würde im Falle einer Verzögerung einen großen Fehler ergeben.

Indem die DF-Schleife an der Stelle des Komponenteneingangs mit dem DF-Eingangssignal, das die geringste Signaldynamik aufweist, mit einem Verzögerungsglied versehen ist, wurde diese DF-Schleife zu einer NDF-Schleife gewandelt. Sofern noch weitere DF-Schleifen im Computerprogramm vorhanden sind, können diese auch mit dem erfindungsgemäßen Verfahren, oder aber mit anderen Verfahren (z.B. manuell) behandelt werden.

Es kann jedoch auch der Verfahrensschritt c), also das Hinzuschalten des Verzögerungsglieds vor das DF-Eingangssignal, dessen Wert die geringste Signaldynamik aufweist, wiederholt werden, um eine weitere DF-Schleife zu einer NDF-Schleife zu wandeln. Die DF-Schleifen werden also nacheinander an der Stelle der DF-Eingangssignale mit der geringsten Signaldynamik aufgetrennt. Dies kann so lange durchgeführt werden, bis keine DF-Schleife im Computerprogramm vorhanden ist, womit auch beliebig verschachtelte DF-Schleifen gelöst werden können. Das bedeutet, dass jegliche DF-Schleifen aufgelöst, d.h. zu NDF-Schleifen umgewandelt, wurden, und damit alle zyklischen Datenabhängigkeiten beseitigt wurden. Die Auflösung der DF-Schleifen ist abermals von der Signaldynamik der (unverzögerten) DF-Eingangssignale innerhalb eines Taktschritts abhängig. Es ist natürlich auch möglich die weiteren DF-Schleifen auf andere Art, als soeben beschrieben zu lösen. Zu beachten ist, dass die DF-Eingangssignale die vormals zu einer DF-Schleife gehörten, welche jedoch aufgelöst, d.h. zur NDF-Schleife gewandelt wurden, und daraufhin kein Teil einer (weiteren) DF-Schleife sind, keine DF-Eingangssignale mehr darstellen. Damit ist die Signaldynamik dieser vormaligen DF-Eingangssignale für eine weitere Behandlung, bzw. Auflösung der ggf. noch vorhandenen DF-Schleifen nicht von Relevanz. Wenn in mehreren DF-Schleifen jeweils DF-Eingangssignale mit derselben Signaldynamik auftreten, so wird in einem ersten Schritt ein Komponenteneingang, der eines dieser DF-Eingangssignale mit derselben Signaldynamik aufweist, mit dem Verzögerungsglied versehen. In einem weiteren Schritt wird ein weiterer Komponenteneingang (einer weiteren noch vorhandenen DF-Schleife), der eines dieser DF-Eingangssignale (mit derselben Signaldynamik) aufweist, mit einem Verzögerungsglied versehen - natürlich nur, sofern das DF-Eingangssignal nach dem ersten Schritt noch ein DF-Eingangssignal ist. Es wäre natürlich auch möglich zwei voneinander unabhängige DF-Schleifen gleichzeitig aufzutrennen, indem in der jeweiligen DF-Schleife jeweils der Komponenteneingang mit dem DF-Eingangssignale mit der geringsten Signaldynamik innerhalb der betreffenden Schleife mit einem Verzögerungsglied versehen wird. Die Abarbeitungsreihenfolge des Computerprogramms ergibt sich schlussendlich aus der Verbindung der Software-Komponenten und enthält nun lediglich Signale in NDF-Schleifen.

Es wird bei Verwendung von Penalty-Werten also nachdem die DF-Eingangssignale der DF-Komponente mit Penalty-Werten versehen wurden das DF-Eingangssignal mit dem geringsten Penalty-Wert ermittelt und der zugehörige Komponenteneingang mit einem Verzögerungsglied versehen, womit die betreffende DF-Schleife aufgetrennt ist. Nach Ermittlung des nächsten unverzögerten DF-Eingangssignals (das noch Teil einer weiteren DF-Schleife ist) mit dem nächsthöherem Penalty-Wert wird abermals der zugehörige Komponenteneingang mit einem Verzögerungsglied versehen und damit die weitere DF-Schleife aufgetrennt, usw.

Der Verfahrensschritt b) wird im Verfahren vorteilhafterweise einmalig durchgeführt. Eine Neu-Bestimmung der Signaldynamik der noch vorhandenen unverzögerten DF-Eingangssignale ist nicht erforderlich, jedoch auch möglich. Es ist jedoch zu beachten, dass durch eine Neu-Bestimmung der Signaldynamik die Optimalität der Lösung ggf. nicht mehr garantiert werden könnte. Es kann jedoch zu beliebigen Zeitpunkten das Vorhandensein von DF-Schleifen und DF-Komponenten wie im Verfahrensschritt a) beschrieben, überprüft werden. Gerade nach dem Behandeln eines DF-Eingangssignals nach dem erfindungsgemäßen Verfahren kann es (insbesondere bei verschachtelten DF-Schleifen) hilfreich sein, die noch vorhandenen DF-Schleifen, DF-Komponenten und DF-Eingangssignale des Computerprogramms erneut zu identifizieren.

Bei der Bestimmung der Signaldynamik des zumindest einen DF-Eingangssignals wird zusätzliche Information zum betrachteten DF-Eingangssignal verwendet. Ein DF-Eingangssignal repräsentiert im Allgemeinen eine physikalische Größe. Aus dieser kann somit in vielen Fällen die zu erwartende Signaldynamik des DF-Eingangssignals geschätzt werden. Vorteilhafterweise wird die Signaldynamik des jeweiligen DF-Eingangssignals anhand der physikalischen Einheit (z.B. Temperatur, Stromstärke, Distanz, etc.) des jeweiligen DF-Eingangssignals bestimmt. Die Verwendung einer physikalischen Einheit ist insbesondere vorteilhaft, da die physikalische Einheit statisch ist, d.h. schon vor dem Abarbeiten des Computerprogramms bekannt ist und zudem in vielen Computerprogrammen gleichermaßen verwendet wird. Jeder physikalischen Einheit (welche beispielsweise aus den SI-Einheiten abgeleitet sind) werden hierbei vorteilhafterweise geschätzte Fehler, bzw. Signaldynamiken hinterlegt, welche wiederum einen geschätzten Fehler ergeben, falls jenes Eingangssignal verzögert werden würde. Diese Zusammenhänge ergeben sich aus der Tatsache, dass sich gewisse Größen (wie z.B. Temperatur, Distanz) langsam ändern, wohingegen sich andere Größen (wie z.B. Stromstärke, Lichtintensität) schnell ändern können. Weiters kann die Signaldynamik des jeweiligen DF-Eingangssignals anhand des Datentyps des jeweiligen DF-Eingangssignals geschätzt werden. Dies ist vor allem dann anzuwenden, wenn für DF-Eingangssignale keine physikalische Einheit definiert ist, bzw. wenn das DF-Eingangssignal keine Einheit hat (z.B. eine Enum-Variable). Der Datentyp des DF-Eingangssignals kann beispielsweise durch Boolean, Integer oder Float repräsentiert sein, wobei die Signaldynamik von Boolean größer ist als Integer und Float die geringste Dynamik aufweist. Weiters könnte die Datentyp-Bandbreite (z.B. 8, 16, 32, 64 bit) in die Schätzung der Signaldynamik einfließen. In einem Prüfstand ist möglicherweise noch mehr Information zu den DF-Eingangssignalen vorhanden, beispielsweise welchen physikalischen Bereich ein Signal annehmen kann. Auch aus diesem Signalbereich kann eine maximale Änderungsgeschwindigkeit abgeschätzt und zur Berechnung der Signaldynamik des zumindest einen DF-Eingangssignals herangezogen werden.

Vorteilhafterweise wird ein Mix aus Einheit und Datentyp der DF-Eingangssignale für die Bestimmung der Signaldynamik des zumindest einen DF-Eingangssignals verwendet, da damit eine genauere Näherung möglich ist.

NDF-Schleifen werden vorteilhafterweise berücksichtigt, indem NDF-Eingangssignale an einem NDF-Komponenteneingang ignoriert werden. Damit sind nur noch die DF-Schleifen von Relevanz und müssen erfindungsgemäß behandelt werden.

Die gegenständliche Erfindung wird nachfolgend unter Bezugnahme auf die Figuren 1 bis 3d näher erläutert, die beispielhaft, schematisch und nicht einschränkend vorteilhafte Ausgestaltungen der Erfindung zeigen. Dabei zeigt

Fig.1 eine beispielhafte Direct-Feedthrough-Schleife

Fig.2 ein signalflussbasiertes Computerprogramm mit einer Non-Direct-Feedthrough-Schleife

Fig.3a ein signalflussbasiertes Computerprogramm mit zwei verschachtelten Direct-Feedthrough-Schleifen

Fig.3b das signalflussbasierte Computerprogramm, deren Direct-Feedthrough-Schleifen mit Penalty-Werten versehen sind

Fig.3c das signalflussbasierte Computerprogramm mit einer zu einer Non-Direct - Feedthrough-Schleife gewandelten Direct-Feedthrough-Schleife

Fig.3d das signalflussbasierte Computerprogramm mit beiden zu einer Non-Direct - Feedthrough-Schleife gewandelten Direct-Feedthrough-Schleifen

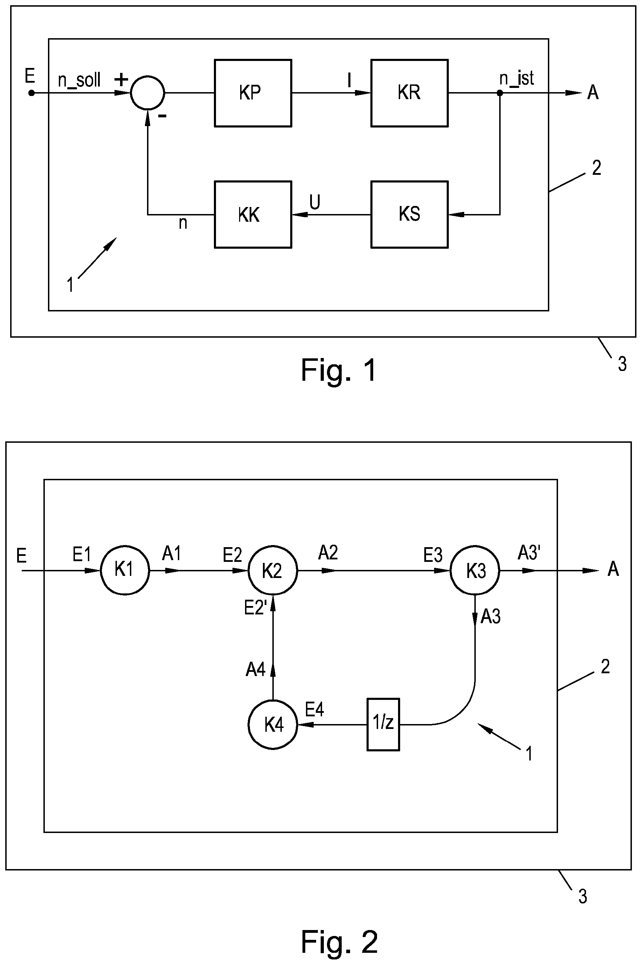

Fig.1 zeigt beispielhaft eine technische Anlage 3 mit einer Recheneinheit 2, die ein konkretes Ausführungsbeispiel eines signalflussbasiertes Computerprogramms 1 ausführt. Die technische Anlage 3 ist beispielsweise ein Prüfstand für ein Fahrzeug oder eine Fahrzeugkomponente (Verbrennungsmotor, Antriebsstrang, etc.) als Prüfling mit einer Recheneinheit 2, beispielsweise als Teil einer elektronischen Steuerung des Prüfstandes, auf der das signalflussbasierte Computerprogramm 1 ausgeführt wird, um eine technische Funktion des Prüfstandes zu steuern, zu regeln, zu automatisieren oder zu simulieren, insbesondere zur Durchführung eines definierten Prüflaufes am Prüfstand mit dem Prüfling.

Die Recheneinheit 2 weist einen Eingang E auf, über den dem signalflussbasierten Computerprogramm 1 eine Solldrehzahl n_soll zugeführt wird. Weiters weist die Recheneinheit einen Ausgang A auf, über den das Computerprogramm 1 eine Ist-Drehzahl n_ist ausgibt. Das signalflussbasierte Computerprogramm 1 weist die Software-Komponenten P-Regler KP, Regelstrecke KR, Drehzahlsensor KS und Konvertierkomponente KK auf, die eine DF-Schleife bilden. Das signalflussbasierte Computerprogramm 1 bildet in diesem Ausführungsbeispiels also einen geschlossenen Regelkreis zur Regelung der Regelstrecke KR ab. Die Solldrehzahl n_soll wird dem P-Regler KP zugeführt. Der P-Regler gibt einen Strom I als Stellgröße aus, welcher der Regelstrecke KR als Eingangssignal zur Verfügung stellt. Die Regelstrecke KR liefert die Ist-Drehzahl n_ist, die am Ausgang A anliegt. Zudem wird der Komponentenausgang der Regelstrecke KR über den Drehzahlsensor KS und die Konvertierkomponente KK auf den Komponenteneingang des P-Reglers KP und damit auf den Eingang E rückgekoppelt. Der Drehzahlsensor KS erhält am Komponenteneingang somit die Ist-Drehzahl n_ist und gibt eine zur Ist-Drehzahl n_ist proportionale Spannung U aus, welche am Komponenteneingang der Konvertierkomponente KK anliegt. Die Konvertierkomponente KK wiederum konvertiert die Spannung U zu einer Drehzahl n, welche auf den Eingang E und damit den Komponenteneingang des P-Reglers KP rückgekoppelt wird. Damit liegen am P-Regler KP die Solldrehzahl n_soll und die Drehzahl n an. Da keine der Komponenten KP, KR, KS, KK ein Verzögerungselement 1/z (in zeitdiskreter Schreibweise nach z-Transformation) aufweisen, liegt eine DF-Schleife vor.

Fig.2 stellt eine technische Anlage 3 mit einer Recheneinheit 2, auf dem ein abstrakteres, verallgemeinertes signalflussbasiertes Computerprogramm 1 ausgeführt wird, dar. Darin sind einige Ausgangssignale A1, A2, A3, A4 an den Komponentenausgängen der SoftwareKomponenten K1, K2, K3, K4 jeweils mit Eingangssignalen E2, E2', E3, E4 an den Komponenteneingängen der Software-Komponenten K1, K2, K3, K4 über die als Pfeile dargestellten Signalpfade verbunden. Ein Ausgangssignal A1, A2, A3, A3', A4 einer SoftwareKomponente K1, K2, K3, K4 kann also, je nach Verbindung, ein Eingangssignal E1, E2, E2', E3, E4 einer anderen Software-Komponente K1, K2, K3, K4 sein. Eine Software-Komponente K1, K2, K3, K4 bildet einen Teil des signalflussbasierten Computerprogramms 1 und alle Software-Komponenten K1, K2, K3, K4 zusammen und deren Verschaltung über die Signalpfade bilden das signalflussbasierte Computerprogramm 1. Eine SoftwareKomponente K1, K2, K3, K4 kann ein beliebiges mathematisches, analytisches, empirisches oder physikalisches Modell in beliebiger Codierung oder ein beliebiger Softwarecode sein und bildet den zumindest einen Komponenteneingang auf den zugehörigen zumindest einen Komponentenausgang der Software-Komponente K1, K2, K3, K4 ab. Beim Ablauf des signalflussbasierten Computerprogramms 1 wird in einem Taktschritt der Abarbeitung von jeder Software-Komponente K1, K2, K3, K4 ein Eingangssignal E1, E3, E4, bzw. auch zwei oder mehr Eingangssignale E2, E2' auf ein Ausgangssignal A1, A2, A4, oder auch auf mehrere Ausgangssignale A3, A3', abgebildet. Wie erwähnt kann die Anzahl der Eingangssignale E1, E2, E2', E3, E4 und Ausgangssignale A1, A2, A3, A3', A4 pro Software-Komponente K1, K2, K3, K4 beliebig sein. Das signalflussbasierte Computerprogramm 1 erhält über den Eingang E der Recheneinheit 2 das Eingangssignal E1 an der ersten Software-Komponente K1, und gibt über einen Komponentenausgang der letzten Software-Komponente K3 ein Ausgangssignal A3' an den Ausgang A der Recheneinheit 2 aus. Der Komponentenausgang der Software-Komponente K1 ist mit dem Komponenteneingang der Software-Komponente K2 verbunden, wodurch die Software-Komponente K2 von der Software-Komponente K1 ein Ausgangssignal A1 als Eingangssignal E2 empfängt. Der Komponentenausgang der Software-Komponente K2 ist weiter mit dem Eingang der Software-Komponente K3 verbunden, wodurch die Software-Komponente K3 ein Ausgangssignal A2 als Eingangssignal E3 empfängt. Wie ersichtlich ist, wird über die Software-Komponente K4 eine NDF-Schleife als Rückkopplung zwischen den Komponenten K3 und K2 gebildet, was durch das Verzögerungssymbol 1/z angedeutet wird. Ein Ausgangssignal A3 der Software-Komponente K3 wird also um einen Taktschritt t der Abarbeitung des signalflussbasierten Computerprogramms 1 verzögert. Als Eingangssignal E4 der Software-Komponente K4 dient somit nicht das Ausgangssignal A3 der Software-Komponente K3 im aktuellen Taktschritt t sondern aus dem vorherigen Taktschritt t-1, womit die Abbildung des Eingangssignals E4 auf das Ausgangssignal A4 durch die Software-Komponente K4 verzögert wird. Die Abbildung basiert also auf dem Ausgangssignal A3 der Software-Komponente K3 aus dem vorherigen Takt t-1. Dies ist die Eigenschaft einer NDF-Schleife. Die Abarbeitungsreihenfolge der Eingangssignale E1, E2, E2', E3, E4, und Ausgangssignale A1, A2, A3, A3', A4 der Software-Komponenten K1, K2, K3, K4 nach dem Muster Ausgangssignal zum Zeitpunkt t A(t) = Abbildung durch Software-Komponenten des Eingangssignals zum Zeitpunkt t K{E(t)} wäre also:

$$A1(t)=K1\{E1(t)\}$$

$$E2(t)=A1(t)$$

$$A2(t)=K2\{[E2(t),E2'(t)]\}$$

$$E3(t)=A2(t)$$

$$E2'(t)=A4(t)$$

$$A3(t)=K3\{E3(t)\}$$

$$E4(t)=A3(t-1)$$

$$A4(t)=K4\{E4(t)\}$$

$$A=K3\{E3(t)\}$$

Die gültige sequentielle Abarbeitungsreihenfolge der Softwarekomponenten K1, K2, K3, K4 wäre also K1, 1/z, K4, K2, K3 oder alternativ auch 1/z, K4, K1, K2, K3. Es ist in diesem Fall lediglich wichtig, dass das Verzögerungsglied 1/z vor der Software-Komponente K4 abgearbeitet wird und dass weiterhin die Software-Komponente K1 und die Software-Komponente K4 vor der Software-Komponente K2 abgearbeitet wird. Trivialerweise wird die SoftwareKomponente K3 in diesem Beispiel als letztes abgearbeitet.

Wäre die Software-Komponente K4 hingegen eine DF-Komponente, dann würde das Ausgangssignal A3 der Software-Komponente K3 nicht durch das Verzögerungsglied 1/z verzögert werden. Damit würde im selben Taktschritt t das dem Ausgangssignal A3 der SoftwareKomponente K3 entsprechende Eingangssignal E4 an der Software-Komponente K4 anliegen. Das Ausgangssignal A2 der Software-Komponente K2, das das Eingangssignal E3 der Software-Komponente K3 entspricht, wird aber benötigt, um das Ausgangssignal A3 der Software-Komponenten K3 zu ermitteln, was zu einer zyklischen Abhängigkeit führt und womit eine DF-Schleife vorliegt. Damit wären die Software-Komponenten K2, K3 und K4 DF-Komponenten, da als Teil einer DF-Schleife an deren Komponenteneingängen, die DF-Eingangssignale E2', E3 und E4 und an deren Komponentenausgängen die DF-Ausgangssignale A2, A3, A4 anliegen würden. Man beachte, dass der Komponenteneingang mit dem Eingangssignal E2 kein Teil der DF-Schleife ist, da darüber keine DF-Schleife aufgespannt wird.

Eine solche DF-Schleife wird erfindungsgemäß aufgetrennt, indem die maximal mögliche Änderung pro Zeiteinheit der Werte der DF-Eingangssignale der DF-Komponenten (die die Schleife bilden) aus zumindest einer Eigenschaft des jeweiligen DF-Eingangssignals ermittelt wird. Es wird ein Verzögerungsglieds 1/z vor den Komponenteneingang, an dem das zumindest eine DF-Eingangssignal, dessen Wert die geringste maximal mögliche Änderung pro Zeiteinheit aufweist, anliegt, geschaltet. Damit wird die DF-Schleife zu einer NDF-Schleife gewandelt.

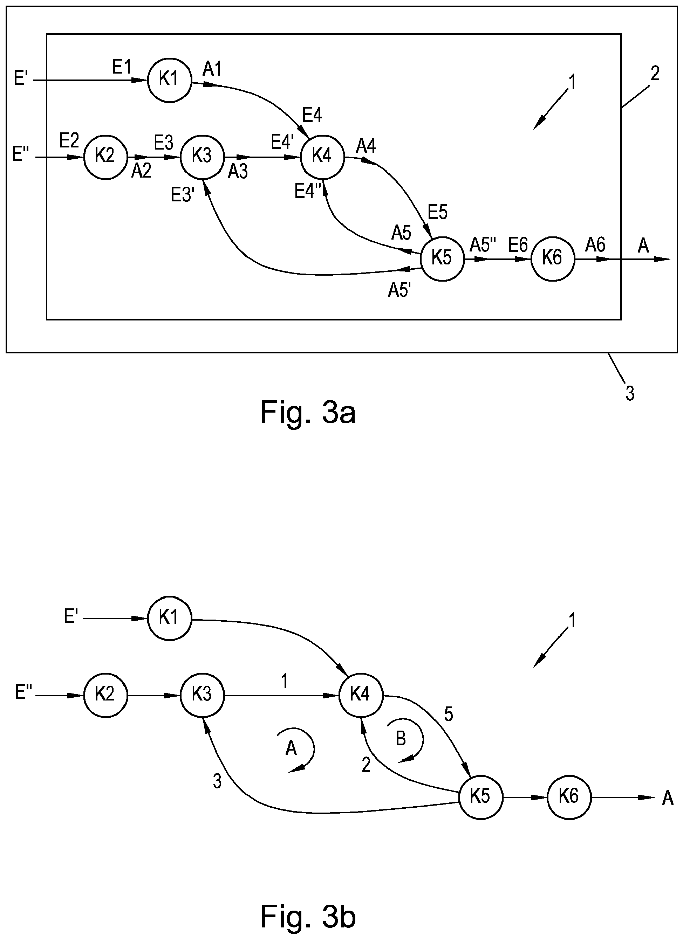

Treten jedoch mehrere DF-Schleifen auf, so müssen im Allgemeinen mehrere Signalpfade an den geeigneten Stellen verzögert werden. Fig.3a zeigt ein auf einer Recheneinheit 2 ausgeführtes signalflussbasiertes Computerprogramm 1 mit den Software-Komponenten K1, K2, K3, K4, K5, K6, wobei zwei verschachtelte DF-Schleifen gebildet werden. Die Eingänge E', E" des Computerprogramms 1 sind jeweils mit den Komponenteneingängen der SoftwareKomponenten K1, K2 verbunden, die somit die Eingangssignale E1, E2 erhalten. Die Komponentenausgänge der Software-Komponenten K1, K2 sind mit den Komponenteneingängen der Software-Komponenten K4, K3 verbunden, welche somit die Ausgangssignale A1 und A2 als Eingangssignale E3 und E4 erhalten. Der Komponentenausgang der Software-Komponente K3 ist wiederum mit dem Komponenteneingang der Software-Komponente K4 verbunden, womit die Software-Komponente K4 das Ausgangssignal A3 der SoftwareKomponente K3 als weiteres Eingangssignal E4' erhält. Der Komponentenausgang der Software-Komponente K4 ist mit dem Komponenteneingang der Software-Komponente K5 verbunden, wodurch dieser das Ausgangssignal A4 der Software-Komponente K4 das Eingangssignal E5 erhält. Über eine nicht verzögerte Rückkopplung sind die Komponentenausgänge der Software-Komponente K5 wiederum mit weiteren Eingängen der Komponenten K3, K4 verbunden, womit diese die Ausgangssignale A5, A5' der Software-Komponente K5 als weitere Eingangssignale E3', E4" erhalten. Damit werden durch diese unverzögerten Rückkoppelungen zwei DF-Schleifen A und B gebildet. Die DF-Schleife A wird von den DF-Komponenten K3, K4 und K5 mit den DF-Eingangssignalen E3', E4' und E5 gebildet. Die DF-Schleife B wird von den DF-Komponenten K4 und K5 mit den DF-Eingangssignalen E5 und E4" gebildet. Das DF-Eingangssignal E3', das Ausgangssignal A3, das DF-Eingangssignal E4', das Ausgangssignal A4, das DF-Eingangssignal E4", das DF-Eingangssignal E5, das Ausgangssignal A5 und das Ausgangssignal A5' spannen somit zwei DF-Schleifen auf, sind also Teil der zwei DF-Schleifen. Die Eingangssignale E3 und E4 beispielsweise bilden keine DF-Schleife, und sind somit kein Teil der DF-Schleife, obwohl sie Teil der DF-Komponenten K3 und K4 sind. Natürlich können Eingangssignale, die nicht Teil der DF-Schleife in diesem Sinne sind, Einfluss auf Ausgangssignale einer DF-Komponente haben, sind jedoch für die erfindungsgemäße Bestimmung der Signaldynamik bzw. Auftrennung von DF-Schleifen nicht wesentlich. Zudem ist ein Komponentenausgang der SoftwareKomponente K5 mit dem Komponenteneingang der Software-Komponente K6 verbunden, womit die Software-Komponente K6 das Ausgangssignal A5" der Software-Komponente K5 als Eingangssignal E6 erhält. Weiters ist der Komponentenausgang der SoftwareKomponente K6 mit dem Ausgang A der Recheneinheit 2 verbunden.

Um nun zu ermitteln, welche der Signalpfade der DF-Schleifen A und B (zuerst) aufgeschnitten werden sollen, werden die Werte der DF-Eingangssignale E3', E4', E5, E4" der DF-Komponenten K3, K4, K5 der DF-Schleifen A und B, erfindungsgemäß auf Signaldynamik untersucht, d.h. auf die größtmögliche Änderung pro Zeiteinheit des Werts des DF-Eingangssignals, in diesem Fall innerhalb eines Taktschrittes t, und mit einer Penalty bewertet. Ein geringer Penalty-Wert bedeutet z.B. eine geringe Signaldynamik. Beispielsweise ergeben sich die Werte für die Penalty wie in Fig. 3b bei den Signalpfaden dargestellt, wobei das DF-Eingangssignal E4' am Komponenteneingang der DF-Komponent K4 offensichtlich gegenüber dem DF-Eingangssignal E4" an einem Komponenteneingang der DF-Komponente K4, dem DF-Eingangssignal E3' des Komponenteneingangs der DF-Komponente K3, sowie des DF-Eingangssignals E5 des Komponenteneingangs der DF-Komponente K5 eine geringe Signaldynamik aufweisen, da das DF-Eingangssignal E4' den Penalty-Wert von Eins (gegenüber Penalty-Werten von Zwei, Drei, bzw. Fünf) aufweist.

Die Penalty-Werte können sich beispielsweise aus dem Datentyp der Werte des DF-Eingangssignals ergeben, z.B. mit der Definition der Penalty-Werte: Boolean: 9, Byte: 7, Integer: 5, Float: 1. Der Hintergrund hierfür ist der, dass sich der Wert eines Float-Wertes pro Zeiteinheit deutlich geringer verändern kann, als der Wert eines Boolean-Wertes, womit die mögliche Signaldynamik eines Float-Wertes kleiner ist. Die Penalty-Werte können auch nach der physikalischen Einheit der DF-Eingangssignale ermittelt werden, z.B. mit der Definition der Penalty-Werte: Temperatur: 1, Massenfluss: 3, Umdrehungen pro Minute: 5, Druck: 7. Dabei nutzt man eine physikalische Interpretation der DF-Eingangssignale. Die Temperatur wird sich in einem technischen System deutlich langsamer ändern können, als der Druck, womit man mit einer geringeren Signaldynamik rechnen kann.

Man kann verschiedene Kriterien zu Ermittlung der Penalty-Werte auch kombinieren. Also beispielsweise zuerst die Bestimmung der physikalischen Einheit und dann innerhalb einer physikalischen Einheit eine weitere Unterteilung gemäß des Datentyps.

Der Signalpfad mit dem geringsten Penalty-Wert von Eins, also das DF-Eingangssignal E4', wird somit aufgetrennt, hier also zwischen der DF-Komponente K3 und K4. Das heißt, dass das Ausgangssignal A3 der DF-Komponente K4 um einen Taktschritt t verzögert als Eingangssignal E4' zur Verfügung steht. Damit wird das DF-Eingangssignal E4' zu einem NDF-Eingangssignal, womit die vormalige DF-Schleife A nun eine NDF-Schleife ist. Das DF-Eingangssignal E5 bleibt jedoch ein DF-Eingangssignal, das weiterhin die DF-Schleife B bildet.

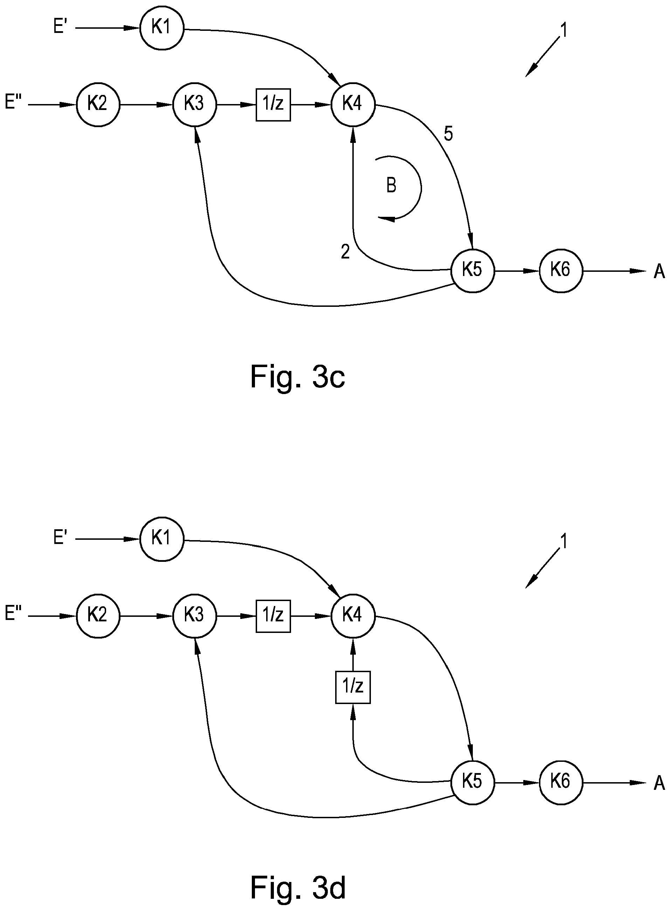

Die DF-Schleife B kann nun in einem weiteren Schritt behandelt werden, vorzugsweise ebenso nach dem Verfahrensschritt 1c). So wird in der noch vorhandenen DF-Schleife B der Signalpfad mit dem geringsten Penalty-Wert, bestimmt - in Fig.3c also der Penalty-Wert von Zwei am Signalpfad vom Ausgangssignal A5 zum DF-Eingangssignal E4" gegenüber dem höheren Penalty-Wert von Fünf am Signalpfad vom DF-Ausganssignal A4 zum DF-Eingangssignal E5. Demnach wird das Ausgangssignal A5 um einen Taktschritt t verzögert und steht der DF-Komponente K4 um diesen verzögerten Taktschritt t als NDF-Eingangssignal E4" zur Verfügung. Damit stellt die vormalige DF-Schleife B nun ebenfalls eine NDF-Schleife dar. Man beachte, dass das Eingangssignal E4 der DF-Komponente K4 nicht aufgetrennt werden muss, da es nicht mit der DF-Schleife verknüpft ist bzw. nicht Teil der DF-Schleife ist. Daher muss auch die Signaldynamik des Eingangssignals E4 gar nicht bestimmt werden.

Es ist zu beachten, dass das Auftrennen einer DF-Schleife nicht bedeutet, dass die DF-Komponenten, die die DF-Schleifen gebildet hatten, automatisch NDF-Komponenten hinsichtlich aller Komponenteneingänge und Komponentenausgänge werden, wie auch in Fig. 3b i.V.m. Fig. 3a anhand der DF-Komponente K4 mit den DF-Eingangssignalen E4, E4' und E4" ersichtlich. Dies wäre lediglich der Fall, wenn diese DF-Komponenten keine weitere DF-Schleife bilden, also keine weiteren Komponenteneingänge mit DF-Eingangssignalen, die Teil einer anderen DF-Schleife sind, aufweisen. Falls eine DF-Schleife aufgetrennt wurde, werden lediglich die DF-Eingangssignale, die die DF-Schleife gebildet hatten, zu NDF-Eingangssignalen - weitere DF-Eingangssignale, die eine andere DF-Schleife bilden, bleiben DF-Eingangssignale, da diese andere DF-Schleife (bis zu einem eventuellen weiteren Auflösen ebendieser) bestehen bleibt.

Laut Fig.3d liegen nach Auftrennen der Signalpfade keine DF-Schleifen mehr vor. Wenn weitere DF-Schleifen vorhanden wären, so würden als nächstes die Signalpfade mit der nächsthöheren Dynamik durch Einfügen eines Verzögerungsglieds 1/z aufgetrennt werden. Auf diese Weise werden die zyklischen Abhängigkeiten aufgelöst und das signalflussbasierten Computerprogramm kann gemäß der damit feststehenden Abarbeitungsreihenfolge abgearbeitet werden. Dabei ist es selbstverständlich, dass von der verzögerten Eingangssignalen die vergangenen Werte zwischengespeichert werden müssen. Das Verfahren kann zum Auflösen aller DF-Schleifen des signalflussbasierten Computerprogramms 1 verwendet werden. Dazu wird die Signaldynamik des zumindest einen DF-Eingangssignals E3', E4', E4", E5 ermittelt und daraufhin vor den Komponenteneingang, an dem das DF-Eingangssignal E3', E4', E4", E5, das die geringste Signaldynamik aufweist, anliegt ein Verzögerungsglied 1/z geschaltet und damit um zumindest einen Taktschritt t verzögert, bis keine DF-Schleife im signalflussbasierten Computerprogramm 1 mehr vorhanden ist.

Für das signalflussbasierte Computerprogramm 1 ist es wichtig, dass alle DF-Schleifen aufgelöst werden, um die Abarbeitungsreihenfolge festzulegen. Für die gegenständliche Erfindung ist es aber ausreichend, wenn zumindest eine dieser DF-Schleifen mit dem oben beschriebenen Verfahren aufgelöst wird. Die anderen DF-Schleifen können auch mit anderen Methoden aufgelöst werden. Vorzugsweise werden aber natürlich alle DF-Schleifen mit dem erfindungsgemäßen Verfahren aufgelöst.

Ebenso muss nicht unbedingt immer um einen Taktschritt t (1/z) verzögert werden, sondern es kann auch eine andere Verzögerung gewählt werden. Allgemein wird also ein Verzögerungsglied $1/z^N$ eingefügt, um eine DF-Schleife aufzulösen.

**Patentansprüche**

1. Verfahren zum Steuern des Ablaufs eines signalflussbasierten Computerprogramms (1) auf einer Recheneinheit (2) einer technischen Anlage (3) zum Steuern, Regeln Automatisieren oder Simulieren einer technischen Funktion der technischen Anlage (3) zur Entwicklung eines Fahrzeuges bzw. einer Fahrzeugkomponente, wobei das Computerprogramm (1) aus miteinander verbundenen Software-Komponenten (K1, K2, K3, K4, K5, K6) besteht und zumindest eine Direct-Feedthrough, DF, Schleife aufweist, bestehend aus folgenden Schritten:

   a. Identifizieren der zumindest einen DF-Schleife und der DF-Komponenten (K3, K4, K5), welche die zumindest eine DF-Schleife bilden, wobei die DF-Komponenten (K3, K4, K5) jeweils zumindest ein an zumindest einem Komponenteneingang anliegendes DF-Eingangssignal auf zumindest ein an zumindest einem Komponentenausgang anliegendes Ausgangssignal unverzögert abbilden, womit das zumindest eine DF-Eingangssignal und das zumindest eine Ausgangssignal Teil der zumindest einen DF-Schleife sind,

   b. Bestimmen der maximal möglichen Änderung pro Zeiteinheit der Werte der DF-Eingangssignale (E3', E4', E4", E5) aus zumindest einer Eigenschaft des jeweiligen DF-Eingangssignals (E3', E4', E4", E5), wobei die maximal mögliche Änderung pro Zeiteinheit als Signaldynamik bezeichnet wird, wobei eine jeweilige Signaldynamik des zumindest einen DF-Eingangssignals (E3', E4', E4", E5) unter Bezug auf hinterlegte und/oder geschätzte Signaldynamiken anhand einer physikalischen Einheit der jeweiligen DF-Eingangssignale (E3', E4', E4", E5) und/oder anhand eines Datentyps der jeweiligen DF-Eingangssignale (E3', E4', E4", E5) bestimmt und jeweils mit einem Penalty-Wert bewertet wird und die Penalty-Werte verglichen werden,

   c. Hinzuschalten eines Verzögerungsglieds ,$1/z^N$, vor jenen Komponenteneingang, an welchem ein DF-Eingangssignal (E3', E4', E4", E5) anliegt, dessen Wert die geringste maximal mögliche Änderung pro Zeiteinheit aufweist, durch Ermitteln des DF-Eingangssignals (E3', E4', E4", E5) mit dem geringsten Penalty-Wert und Versehen des zugehörigen Komponenteneingangs mit einem Verzögerungsglied ,$1/z^N$,

   d. Ausführen des Computerprogramms (1) nach der in Schritt a) bis c) ermittelten Verbindung der Software-Komponenten.

2. Verfahren nach Anspruch 1, wobei der Schritt c) wiederholt wird, bis keine DF-Schleife im Computerprogramm (1) vorhanden ist.

3. Verfahren nach Anspruch 2, wobei vor jedem Wiederholen des Schritts c) auch der Schritt a) wiederholt wird.

4. Computerprogrammprodukt, das Anweisungen enthält, die, wenn sie auf einer Steuereinrichtung, insbesondere einer elektronischen Steuerung eines Prüfstands, ausgeführt werden, ein Verfahren nach einem der Ansprüche 1 bis 3 durchführen.

5. Computerlesbares Medium, auf welchem ein Computerprogrammprodukt nach Anspruch 4 gespeichert ist.

**Claims**

1. A method for controlling the sequence of a signal flow-based computer program (1) on a computing unit (2) of a technical system (3) in order to control, regulate, automate, or simulate a technical function of the technical system (3), in particular in order to develop a vehicle or a vehicle component, wherein the computer program (1) consists of interconnected software components (K1, K2, K3, K4, K5, K6) and has at least one Direct-Feedthrough, DF, loop, **characterized in that** the following steps are carried out:

a) identifying the at least one DF loop and the DF components (K3, K4, K5), which form the at least one DF loop, each said DF component (K3, K4, K5) instantaneously mapping at least one DF input signal present at at least one component input to at least one output signal present at at least one component output, whereby the at least one DF input signal and the at least one output signal are part of the at least one DF loop;

b) determining the maximum possible change per time unit of the values of the DF input signals (E3', E4', E4", E5) from at least one property of the respective DF input signal (E3', E4', E4", E5), wherein the maximum possible change per time unit is called signal dynamic, and wherein a respective signal dynamic of the at least one DF input signal (E3', E4', E4", E5) is determined with reference to stored and/or estimated signal dynamics based on a physical unit of the respective DF input signal (E3', E4', E4", E5) and/or based on a datatype of the respective DF input signal (E3', E4', E4", E5) and each evaluated with penalty value and wherein the penalty values are compared;

c) Activating a delay element ($1/z^N$) in front of the component input where a DF input signal (E3', E4', E4", E5) is present whose value has the smallest maximum possible change per time unit, by determining the DF input signal (E3', E4', E4", E5) with the lowest penalty value and by providing the associate component input with a delay element ($1/z^N$);

d) running the computer program (1) in accordance with the connection of the software components ascertained in steps a) to c).

2. The method according to claim 1, wherein the step c) is repeated until no DF loop is present in the computer program (1).

3. Method according to claim 2, wherein before each repetition of the step c) the step a) is also repeated.

4. A computer program product, which contains instructions which, if run on a control device, in particular an electronic controller of a test bench, carry out a method according to one of claims 1 to 3.

5. A computer-readable medium, on which a computer program product according to claim 4 is stored.

**Revendications**

1. Procédé permettant de commander le déroulement d'un programme informatique (1) basé sur un flux de signaux sur une unité de calcul (2) d'une installation technique (3) pour la commande, la régulation, l'automatisation ou la simulation d'une fonction technique de l'installation technique (3) pour le développement d'un véhicule ou d'un composant de véhicule, le programme informatique (1) étant constitué de composants logiciels (K1, K2, K3, K4, K5, K6) connectés les uns aux autres et présentant au moins une boucle de traversée directe, DF, constitué des étapes suivantes :

a. identification de l'au moins une boucle DF et des composants DF (K3, K4, K5) qui forment l'au moins une boucle DF, les composants DF (K3, K4, K5) reproduisant instantanément respectivement au moins un signal d'entrée DF présent au niveau d'au moins une entrée de composant sur au moins un signal de sortie présent au niveau d'au moins une sortie de composant, moyennant quoi l'au moins un signal d'entrée DF et l'au moins un signal de sortie font partie de l'au moins une boucle DF,

b. détermination de la variation maximale possible par unité de temps des valeurs des signaux d'entrée DF (E3', E4', E4", E5) à partir d'au moins une propriété du signal d'entrée DF (E3', E4', E4", E5) respectif, la variation maximale possible par unité de temps étant désignée en tant que dynamique de signal, une dynamique de signal respective de l'au moins un signal d'entrée DF (E3', E4', E4", E5) étant déterminée par rapport à des dynamiques de signal enregistrées et/ou estimées à l'aide d'une unité physique des signaux d'entrée DF (E3', E4', E4", E5) respectifs et/ou à l'aide d'un type de données des signaux d'entrée DF (E3', E4', E4", E5) respectifs et étant évaluée respectivement avec une valeur de pénalité et les valeurs de pénalité étant comparées,

c. ajout d'un élément de retardement, $1/z^N$, en amont d'une entrée de composant, au niveau de laquelle est présent un signal d'entrée DF (E3', E4', E4", E5) dont la valeur présente la plus petite variation maximale possible par unité de temps, par détection du signal d'entrée DF (E3', E4', E4", E5) comportant la plus petite valeur de pénalité et fourniture d'un élément de retardement, $1/z^N$, à l'entrée de composant associée,

d. exécution du programme informatique (1) après la connexion des composants logiciels détectée dans les étapes a) à c).

2. Procédé selon la revendication 1, dans lequel l'étape c) est répétée jusqu'à ce qu'il n'y ait pas de boucle DF dans le programme informatique (1).

3.  Procédé selon la revendication 2, dans lequel l'étape a) est également répétée avant chaque répétition de l'étape c).

4.  Produit programme informatique contenant des instructions qui, lorsqu'elles sont exécutées sur un dispositif de commande, en particulier une commande électronique d'un banc d'essai, mettent en œuvre un procédé selon l'une des revendications 1 à 3.

5.  Support lisible par ordinateur sur lequel est stocké un produit programme informatique selon la revendication 4.

Fig. 1

Fig. 2

Fig. 3a

Fig. 3b

Fig. 3c

Fig. 3d

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 8849641 B1

- US 20050060129 A1

**In der Beschreibung aufgeführte Nicht-Patentliteratur**

- **D.B.JOHNSON.** Finding all the elementary circuits of a directed graph. *Siam J. Comput,* 1975, vol. 4 (1
- A new way to enumerate cycles in graph. **H.LUI ; J.WANG.** State Key Lab of Intelligent Technology and System Department of Computer Science and Technology. Tsinghua University, 2006

- **M.BENEDIKT ; F.R.HOLZINGER.** *Automated Configuration for Non-Iterative Co-Simulation,* 2016